# EUROPÄISCHE PATENTSCHRIFT

(11) **EP 0 762 798 B1**
(45) Veröffentlichungstag und Bekanntmachung des Hinweises auf die Patenterteilung: **20.10.2004**
(21) Anmeldenummer: 96112784.2
(22) Anmeldetag: 07.08.1996
(51) Int. Cl.: H04Q 11/04

(54) **Verfahren zum Übertragen von Signalisierungsinformationen innerhalb eines BISDN-Netzes**
Method for transferring signalling information within a BISDN network
Méthode de transfert d'information de signalisation dans un réseau BISDN

(30) Priorität: 17.08.1995 DE 19530322
(43) Veröffentlichungstag der Anmeldung: 12.03.1997
(73) Patentinhaber: SIEMENS AKTIENGESELLSCHAFT, 80333 München (DE)
(72) Erfinder: Gradischnig, Klaus, Dipl.-Ing., 82131 Gauting (DE)

(56) Entgegenhaltungen:
- LAW B: "SIGNALLING IN THE ATM NETWORK" BT TECHNOLOGY JOURNAL, Bd. 12, Nr. 3, 1. Juli 1994 (1994-07-01), Seiten 93-107, XP000454303 ISSN: 0265-0193
- GRADISCHNIG K D: "TRENDS OF SIGNALLING PROTOCOL EVOLUTION IN ATM NETWORKS" ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, Bd. 2, Nr. SYMP. 15, 23. April 1995 (1995-04-23), Seiten 310-314, XP000495673 VERBAND DEUTSCHER ELEKTROTECHNIKER (VDE) ET ALISBN: 3-8007-2093-0

## Beschreibung

Die Erfindung betrifft ein Verfahren zum Übertragen von Signalisierungsinformationen auf Übertragungsstrecken eines Breitband-ISDN-Kommunikationsnetzes gemäß Oberbegriff des Patentanspruches 1. Ein derartiges Verfahren ist bereits aus "ATM-Netzwerke-Aufbau, Funktion, Performance", Othmar Kyas, DATACOM Buchverlag GmbH Bergheim, 1995 bekannt.

Für die zweite Teilschicht (Service Specific Coordination Function - SSCF) der ATM-Anpassungsschicht (ATM Adaption Layer) ist durch die ITU-Empfehlung Q.2140 eine Vielzahl von Protokoll-Prozeduren für die Anpassung der Anwendungsschicht an die ebenfalls zu der ATM-Anpassungsschicht gehörende erste Teilschicht (Service Specific Connection Oriented Protocol-SSCOP) und für die Durchführung eines Teiles des durch die Anwendungsschicht festgelegten Signalisierungsprotokolls festgelegt. Diese Protokoll-Prozeduren erfordern zumindest teilweise einen erheblichen Entwicklungsaufwand sowie einen erheblichen Einsatz von Software- und Hardwareressourcen, was die Kosten für die einzelnen Knoten eines Breitband-ISDN-Kommunikationsnetzes erhöht.

In Dokument Law B.: "Signalling in the ATM Network" BT Technology Journal, Bd. 12, Nr. 3, 1. Juli 1994, Seiten 93-107 werden Ansätze für die Signalisierung in ATM-Netzen, die B-ISDN unterstützen, vorgeschlagen. Hierbei wird gezeigt, wie die Signalisierung an der Benutzer-Netzwerk-Schnittstelle abgeleitet wird und welche Investitionen an der Netzwerkknoten-Schnittstelle notwendig sind.

Aus Dokument Gradischnig K.D.: "Trends of Signalling Protocol Evolution in ATM Networks" ISS 1995, World Telecommunications Congress (International Switching Symposium), Advanced Switching Technologies for Universal Telecommunications at the Beginning of the 21^{st} Century Berlin, April 23-28, 1995, Bd. 2, Nr. Symp. 15, Seiten 310-314 werden ebenfalls Ansätze in Bezug auf B-ISDN gezeigt, welche Änderungen an den Netzwerkknoten-Schnittstellen sowie deren Protokolle notwendig sind und welche Auswirkungen sie auf dem MTP (Message Transfer Part) sowie den SCCP (Signalling Connection Control Part) und die Signalisierungsnetzstruktur haben.

Jedoch löst keiner dieser Ansätze die oben genannten Probleme zufriedenstellend.

Es ist nun Aufgabe der vorliegenden Erfindung, einen Weg zu zeigen, wie ein Verfahren gemäß Oberbegriff des Patentanspruches 1 ausgebildet werden kann, um den Steuerungsaufwand und damit den Aufwand für die Software- und Hardwareressourcen in den einzelnen Knoten eines Breitband-ISDN-Kommunikationsnetzes reduzieren zu können.

Gelöst wird diese Aufgabe durch die im Patentanspruch 1 angegebenen Verfahrensmerkmale. Die Erfindung bringt dabei den Vorteil mit sich, dass die gegenüber der ITU-Empfehlung Q.2140 modifizierte zweite Teilschicht der ATM-Anpassungsschicht kompatibel zu einer voll nach der ITU-Empfehlung Q.2140 implementierten zweiten Teilschicht bezüglich des Nachrichtenaustausches über eine Übertragungsstrecke ist, jedoch sonstige komplexe Funktionen nicht vorgesehen sind.

Ein weiterer Vorteil des Verfahrens gemäß Patentanspruch 2 besteht darin, daß die entsprechend der vorliegenden Erfindung modifizierte zweite Teilschicht auch mit einer ATM-Anpassungsschicht einer über eine Übertragungsstrecke verbundenen Gegenstelle zusammenarbeiten kann, in welcher keine zweite Teilschicht implementiert ist, indem die modifizierte zweite Teilschicht auf die Abgabe einer Betriebsbereitschafts-Information hin auch das unmittelbare Auftreten von Nutzinformationen als Bestätigung einer Betriebsbereitschaft der Gegenstelle interpretiert.

Im folgenden wird die vorliegende Erfindung anhand von Zeichnungen beispielsweise näher erläutert.
- FIG 1: zeigt in schematischer Form ein Schichtenmodell für die Signalisierung in einem Breitband-ISDN-Kommunikationsnetz und
- FIG 2: zeigt eine Zustandstabelle für eine service-spezifische Anpassungs-Teilschicht entsprechend der vorliegenden Erfindung.

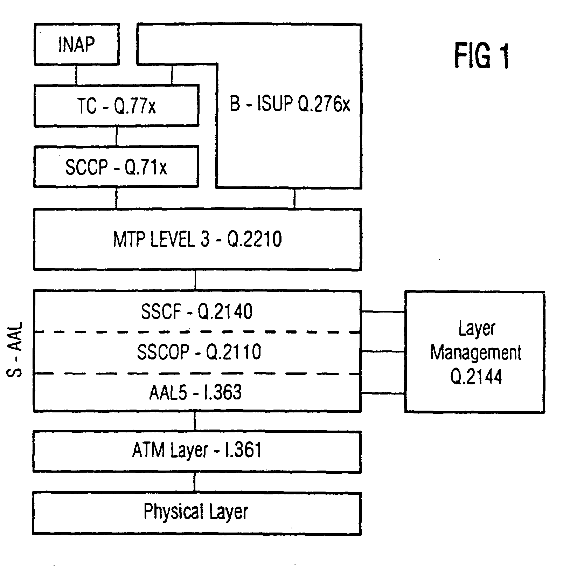

In einem nach dem asynchronen Transfermodus ("Asynchronous Transfer Mode"- ATM) arbeitenden Breitband-ISDN-Kommunikationsnetz werden für den Aufbau und Abbau von Verbindungen von den Nutzkanälen abweichende Signalisierungskanäle auf Übertragungsstrecken zwischen den einzelnen Netzknoten benutzt. Für eine derartige Signalisierung ist dabei ein Signalisierungsprotokoll beispielsweise nach einem Breitband-ISDN-Schichtenmodell festgelegt. Dieses für die Signalisierung geltende Schichtenmodell mit Angabe der für die einzelnen Schichten relevanten ITU-Empfehlungen ist in FIG 1 dargestellt. Danach ist die unterste Schicht durch die physikalische Schicht ("Physical Layer") gebildet. An diese schließt sich eine ATM Schicht ("ATM Layer") an, durch welche gemäß der ITU-Empfehlung I.361 im wesentlichen das Format der innerhalb des Kommunikationsnetzes zu übertragenden ATM-Zellen festgelegt wird. Als nächstes folgt eine ATM-Anpassungsschicht S-AAL für die Signalisierung ("Signaling ATM Adaption Layer"). Diese ist in drei Teilschichten, nämlich eine allgemeine Anpassungs-Teilschicht sowie zwei weitere service-spezifische Anpassungs-Teilschichten, unterteilt.

Durch die mit AAL5 ("ATM Adaption Layer 5") bezeichnete allgemeine Anpassungs-Teilschicht, welche durch die ITU-Empfehlung I.363 definiert ist, werden im wesentlichen die im Zuge einer Signalisierung zu übertragenden Informationen auf ATM-Zellen aufgeteilt bzw. aus ATM-Zellen rückgewonnen sowie eine Überprüfung von ATM-Zellen auf eine fehlerfreie Übertragung beispielsweise anhand eines sogenannten, den ATM-Zellen jeweils beigefügten "Cyclic Redundancy Check Codes" durchgeführt.

Eine erste der service-spezifischen Anpassungs-Teilschichten, welche mit SSCOP ("Service Specific Connection Oriented Protocol") bezeichnet und durch die ITU-Empfehlung Q.2110 definiert ist, dient im wesentlichen zur Nachrichtensicherung und zur Flußsteuerung. An diese schließt sich die zweite, in der ITU-Empfehlung Q.2140 definierte service-spezifische Anpassungs-Teilschicht an, welche mit SSCF ("Service Specific Coordination Function") bezeichnet und durch welche im wesentlichen eine Anpassung der ersten service-spezifischen Anpassungs-Teilschicht (SSCOP") an eine höhere Anwendungsschicht vorgenommen sowie ein Teil des Signalisierungsprotokolls durchgeführt wird. Beide service-spezifischen Anpassungs-Teilschichten stehen dabei mit einem durch die ITU-Empfehlung Q.2144 festgelegten "Layer Management" in Verbindung.

An die ATM-Anpassungsschicht S-AAL schließt sich schließlich die gerade erwähnte Anwendungschicht an, welche als Schnittstelle zu der ATM-Anpassungsschicht einen sogenannten, durch die ITU-Empfehlung Q.2210 festgelegten "Message Tranfer Part Level 3" (MTP Level 3) aufweist. Die zusätzlich in FIG 1 angegebenen, mit SCCP, TC, INAP und B-ISUP bezeichneten Teilschichten der Anwendungsschicht realisieren im wesentlichen Signalisierungsprotokoll-Teile und sind für SCCP durch die ITU-Empfehlung Q.71x, für TC durch die ITU-Empfehlung Q.77x und für B-ISUP durch die ITU-Empfehlung Q.276x festgelegt. Da diese Signalisierungsprotokoll-Teile definiert und nicht Gegenstand der vorliegenden Erfindung sind, wird darauf im folgenden nicht näher eingegangen.

Innerhalb der zuvor genannten service-spezifischen Anpassungs-Teilschicht SSCF der ATM-Anpassungsschicht sind nach der ITU-Empfehlung Q.2140 an einem sogenannten "Network Node Interface" (NNI) neben Protokollprozeduren für Anpassungsfunktionen, welche keine Kommunikationen über eine Übertragungsstrecke mit einer Gegenstelle (Knoten) erfordern, Protokollprozeduren für einen Teil des Signalisierungsprotokolls vorgesehen. Es handelt sich hierbei beispielsweise um ein sogenanntes "Initial Alignment", welches zu Beginn eines geforderten Verbindungsaufbaus durchgeführt wird. Danach wird von der service-spezifischen Anpassungs-Teilschicht SSCF auf eine Verbindungsanforderung von der zugehörigen Anwendungsschicht (MTP Level 3) hin zunächst ein Verbindungsaufbau durch die zweite Anpassungs-Teilschicht angestoßen. Nach erfolgtem Verbindungsaufbau wird dann durch die service-spezifische Anpassungs-Teilschicht SSCF eine Prüfphase ("Proving Phase") durchgeführt, bei welcher unter einem Nachrichtenaustausch über den für die jeweilige Verbindung in Frage kommenden Signalisierungskanal eine Überprüfung des Übertragungsweges auf Fehlerfreiheit bzw. ausreichende Übertragungsqualität durchgeführt wird. Damit ist ein relativ hoher Steuerungsaufwand und damit ein hoher Aufwand an Software- und Hardwareressourcen für diese Überprüfung und die damit verbundenen Zeitüberwachungen erforderlich. Nach dieser Überprüfung wird dann durch die Anpassungs-Teilschicht SSCF eine die Betriebsbereitschaft anzeigende Information ("in service") über den betreffenden Signalisierungskanal zu der Gegenstelle hin Übertragen und das Eintreffen einer dieser Information entsprechenden Information von der Gegenstelle überwacht. Trifft eine solche Information ein, so wird dies der zugehörigen Anwendungsschicht als Bestätigung für einen erfolgten Verbindungsaufbau signalisiert. Durch die Anwendungsschicht kann dann mit der Übertragung von durch das Signalisierungsprotokoll festgelegten Nachrichten begonnen werden.

In entsprechender Weise wird durch die Anpassungs-Teilschicht SSCF auf eine über den Signalisierungskanal übertragene Verbindungsanforderung hin der zugehörigen Anpassungs-Teilschicht SSCOP der Verbindungswunsch signalisiert und nach dessen Akzeptierung eine zuvor erwähnte Prüfphase durchgeführt. Erst nach deren erfolgreicher Durchführung wird eine die Betriebsbereitschaft anzeigende Information als Bestätigung für die Betriebsbereitschaft über den in Frage kommenden Signalisierungskanal übertragen.

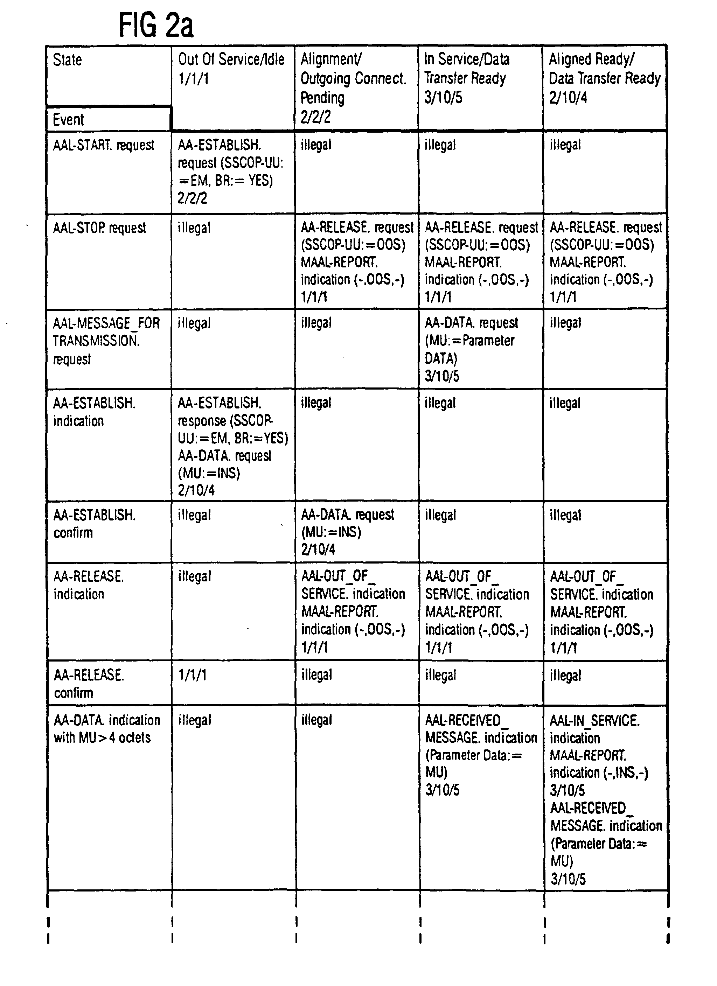

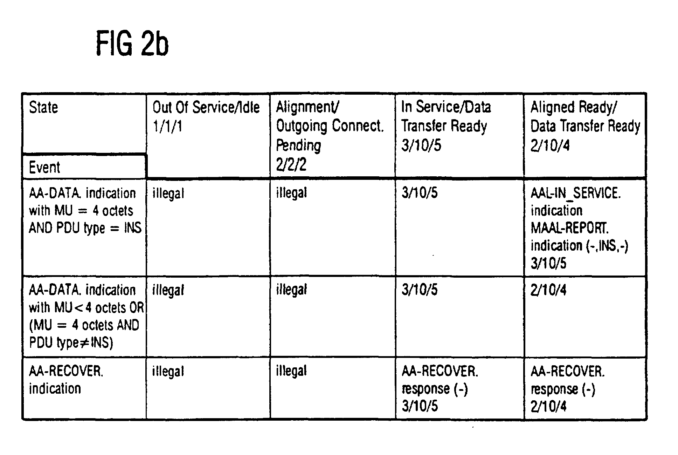

Gemäß der vorliegenden Erfindung wird nun das nach der ITU-Empfehlung Q.2140 vorgesehene, gerage erläuterte Verfahren derart modifiziert, daß der beschriebene Nachrichtenaustausch zwischen den Anpassungs-Teilschichten SSCF zweier Gegenstellen ohne die oben angegebene Prüfphase in der jeweiligen Gegenstelle durchgeführt wird. Dies bringt den Vorteil mit sich, daß die Anpassungs-Teilschicht SSCF hinsichtlich des Nachrichtenaustausches kompatibel zu einer voll der ITU-Empfehlung Q.2140 entsprechenden Anpassungs-Teilschicht SSCF, jedoch hinsichtlich des Aufwandes wesentlich reduziert ist und keinerlei Zeitüberwachungs-Funktionen zu realisieren hat, so daß die Verwendung von Zählern und Zeitgliedern entfallen kann. Dies ergibt sich beispielsweise aus einem Vergleich des in FIG 2 dargestellten Zustandsdiagrammes für diese Teilschicht SSCF mit dem entsprechenden Zustandsdiagramm gemäß der ITU-Empfehlung Q.2140.

Eine gemäß der vorliegenden Erfindung reduzierte Anpassungs-Teilschicht SSCF bringt darüber hinaus den Vorteil mit sich, daß diese beispielsweise in Netzwerkkonfigurationen anwendbar ist, in welchen die Berücksichtigung einer oben genannten Prüfphase nicht notwendig ist bzw. keine Vorteile bringt. Als Beispiel seien hier ATM-Pilotprojekte, an welche oft nicht dieselben Qualitätsanforderungen wie an in vollem kommerziellen Einsatz befindliche Kommunikationsnetze gestellt werden, oder Übertragungsstrecken genannt, für die es keine Ersatz-Übertragungsstrecken gibt, bei denen also eine Außerbetrieb- bzw. Nicht-Inbetriebnahme einer Übertragungsstrecke wegen minderer Qualität keine Vorteile, sondern im Gegenteil Nachteile bringen würde.

Bei dem zuvor erläuterten Ausführungsbeispiel ist, wie zuvor erläutert wurde, vorgesehen, daß durch die Anpassungs-Teilschicht SSCF eine die Betriebsbereitschaft anzeigende Information ("in service") über einen Signalisierungskanal zu einer Gegenstelle hin Übertragen und das Eintreffen einer dieser Information entsprechenden Information von der Gegenstelle als Bestätigung für deren Betriebsbereitschaft überwacht wird. Bei einem weiteren Ausführungsbeispiel ist dies dahin gehend modifiziert, daß durch die Anpassungs-Teilschicht SSCF als Bestätigung für die Betriebsbereitschaft einer Gegenstelle entweder eine von dieser empfangene, gerade erwähnte Information oder, ohne eine solche Information, eine direkt empfangene Nutzinformation, d.h. eine von der dieser Gegenstelle zugehörigen Anwendungsschicht entsprechend dem festgelegten Signalisierungsprotokoll abgegebene Nutzinformation, gewertet wird. Damit ist es möglich, daß die Anpassungs-Teilschicht SSCF auch mit der ATM-Anpassungsschicht S-AAL einer Gegenstelle zusammenarbeiten kann, welche über keine Anpassungs-Teilschicht SSCF verfügt. Dies schafft beispielsweise auch die Möglichkeit, Netze bzw. Übertragungstrecken, welche überhaupt keine Anpassungs-Teilschicht SSCF verwenden, sukzessive auf Netze bzw. Übetragungsstrecken, welche eine volle Anpassungs-Teilschicht SSCF gemäß der ITU-Empfehlung Q.2140 verwenden, überzuführen. Die Umstellung kann in zwei Stufen erfolgen. Zuerst wird das Netz bzw. die Übertragungstrecke sukzessive auf die reduzierte Anpassungs-Teilschicht SSCF gemäß der vorliegenden Erfindung aufgerüstet. Anschließend kann von diesem Stand aus sukzessive die Einführung der vollen Anpassungs-Teilschicht SSCF gemäß der ITU-Empfehlung Q.2140 erfolgen. Eine komplexe und kostspielige quasi-gleichzeitige Umstellung kann damit vermieden werden.

Vorstehend wurde ausgeführt, daß in der gemäß der vorliegenden Erfindung modifizierten Anpassungs-Teilschicht SSCF keine Zeitüberwachungen durchgeführt werden. Dabei kann jedoch durch die zugehörige Anwendungsschicht, beispielsweise durch die erwähnte Teilschicht MTP Level 3, mit der Abgabe einer Verbindungsanforderung der Verbindungsaufbau zeitlich überwacht werden. Alternativ dazu kann auch entgegen den vorstehenden Ausführungen zumindest der Verbindungsaufbau durch die Anpassungs-Teilschicht SSCF zeitlich überwacht werden.

## Patentansprüche

1. Verfahren zum Übertragen von Signalisierungsinformationen auf Übertragungsstrecken eines nach einem asynchronen Transfermodus (ATM) arbeitenden Breitband-ISDN-Kommunikationsnetzes, in welchem von Nutzkanälen abweichende Signalisierungskanäle benutzt sind und auf diesen jeweils für den Aufbau und Abbau von Verbindungen ein Signalisierungsprotokoll entsprechend einem Breitband-ISDN-Schichtenmodell festgelegt ist, nach dem eine physikalische Schicht, eine ATM-Schicht, eine ATM-Anpassungsschicht und eine den Aufbau und Abbau von Verbindungen steuernde Anwendungsschicht definiert sind und innerhalb der ATM-Anpassungsschicht neben einer allgemeinen Anpassungs-Teilschicht (AAL5) eine erste, im wesentlichen der Nachrichtensicherung und Flußsteuerung dienende service-spezifische Teilschicht (SSCOP) sowie eine zweite, der Anpassung dieser service-spezifische Teilschicht an die Anwendungsschicht und zur Durchführung eines Teiles des Signalisierungsprotokolles dienende Teilschicht (SSCF) vorgesehen sind,
**dadurch gekennzeichnet,**
**daß** durch die ITU-Empfehlung Q.2140 festgelegte Protokoll-Prozeduren für die zweite Teilschicht derart modifiziert sind, daß auf eine Verbindungsanforderung von der zugehörigen Anwendungsschicht hin durch die zweite Teilschicht zunächst ein Verbindungsaufbau durch die erste Teilschicht angestoßen und nach erfolgtem Verbindungsaufbau sofort ohne eine vorherige, der Überprüfung des Übertragungsweges dienende Überprüfungsphase eine die Betriebsbereitschaft anzeigende Information über den in Frage kommenden Signalisierungskanal übertragen wird,
**daß** das Auftreten einer dieser Information entsprechenden Information in dem betreffenden Signalisierungskanal überwacht und der zugehörigen Anwendungsschicht als Bestätigung für den erfolgten Verbindungsaufbau signalisiert wird und daß auf eine über den Signalisierungskanal übertragene Verbindungsanforderung hin der zweiten Teilschicht der Verbindungswunsch von der zugehörigen ersten Teilschicht her signalisiert wird und nach dessen Akzeptierung durch die zweite Teilschicht sofort ohne eine zuvor genannte Überprüfungsphase eine die Betriebsbereitschaft anzeigende Information als Bestätigung für die Betriebsbereitschaft über den in Frage kommenden Signalisierungskanal übertragen wird.

## Claims

1. Method for transferring signalling data on transmission links of a broadband ISDN communication network working in the asynchronous transfer mode (ATM), in which signalling channels that differ from user-data channels are used, and a signalling protocol corresponding to a broadband ISDN layer model is defined on these for establishing and releasing connections respectively, according to which are defined a physical layer, an ATM layer, an ATM adaptation layer and an application layer controlling the establishing and release of connections, and within the ATM adaptation layer are provided, in addition to a general adaptation sublayer (AAL5), a first service specific sublayer (SSCOP) used essentially for data integrity and flow control, and a second sublayer (SSCF) used for adapting this service specific sublayer to the application layer and for implementing part of the signalling protocol,
**characterized in that**
protocol procedures specified by ITU Recommendation Q.2140 for the second sublayer are modified such that in response to a connection request from its associated application layer, the second sublayer first initiates the establishment of a connection by the first sublayer, and once the connection is established, a data item indicating being in service is transferred over the signalling channel concerned immediately without a prior test phase for checking the transmission path,
that the occurrence in the signalling channel concerned of a data item corresponding to this data item is monitored for, and is signalled to the associated application layer as confirmation of the connection being established,
and that in response to an incoming connection request transferred over the signalling channel, the connection request is signalled to the first adaptation sublayer by the associated second sublayer, and after it is accepted, a data item indicating being in service is immediately transferred by the second sublayer over the signalling channel concerned, without an aforementioned test phase, as confirmation of being in service.

## Revendications

1. Procédé permettant de transmettre des informations de signalisation sur des liaisons de transmission d'un réseau de communication RNIS à large bande fonctionnant selon un mode de transfert asynchrone (MTA ou, en anglais, ATM), dans lequel sont utilisés des canaux de signalisation différents des canaux utiles et sur lesquels est fixé, pour l'établissement et la libération des liaisons, un protocole de signalisation correspondant à un modèle à couches du RNIS à large bande, selon lequel sont définies une couche physique, une couche MTA, une couche d'adaptation au MTA et une couche d'application contrôlant l'établissement et la libération des liaisons et dans lequel sont prévues, dans la couche d'adaptation au MTA, en plus d'une couche partielle (AAL5) d'adaptation générale, une première couche partielle (SSCOP), spécifique au service et servant essentiellement à la protection des messages et au contrôle du flux, ainsi qu'une deuxième couche partielle (SSCF), servant à l'adaptation de cette couche partielle spécifique au service à la couche d'application et à l'exécution d'une partie du protocole de signalisation,
**caractérisé par le fait**
**que** des procédures de protocole fixées par la recommandation de l'UIT Q.2140 sont modifiées pour la deuxième couche partielle de telle manière que, à la suite d'une demande de liaison envoyée par la couche d'application respective, la deuxième couche partielle provoque d'abord l'établissement d'une liaison par la première couche partielle et que, immédiatement après l'établissement de la liaison, sans phase de vérification servant au contrôle de la voie de transmission, une information indiquant la disponibilité de fonctionnement est transmise sur le canal de signalisation dont il est question,
**que** l'apparition d'une information relative à cette information est surveillée sur le canal de signalisation concerné et qu'elle est signalisée à la couche d'application correspondante en tant que confirmation de l'établissement de la liaison et
**que**, à la suite d'une demande de liaison transmise sur le canal de signalisation, la requête de liaison est signalisée à la deuxième couche partielle par la première couche partielle correspondante et, une fois que cette requête est acceptée, la deuxième couche partielle envoie immédiatement sur le canal de signalisation dont il est question, sans la phase de vérification citée plus haut, une information indiquant la disponibilité de fonctionnement en tant que confirmation de la disponibilité de fonctionnement.
